# EUROPEAN PATENT APPLICATION

(11) **EP 1 422 107 A1**
(43) Date of publication of application: **26.05.2004**
(21) Application number: 02026313.3
(22) Date of filing: 21.11.2002
(51) Int. Cl.: B60R 11/02, B60R 22/00

(54) **Cellular telephone holder for vehicles**

(71) Applicant: Grani & Partners S.p.A., 20123 Milano (IT)
(72) Inventor: Grani, Antonio, 41010 Portile (Prov. of Modena) (IT); Fabiani, Laura, 21100 Varese (IT)
(74) Representative: Modiano, Guido, Dr.-Ing.

(57) **Abstract**

A cellular telephone holder (1) comprising a cellular telephone support (2) and means (3) for fixing the support (2) to a seat belt (4) of a vehicle.

## Description

The present invention relates to a cellular telephone holder for vehicles.

It is known that motor vehicle drivers use cellular telephones (mobile telephones) with the aid of an in-ear headset while driving. These headsets are constituted by a wire that is connected to the cellular telephone and is provided with a receiver, which can be inserted in one ear, and with a transmitter, both of which are activated on command or automatically if the driver receives a call from outside.

The driver can thus listen to calls and answer them without taking his hands off the steering wheel.

However, there is the problem of where to place the cellular telephone; for example, it is rested on one of the front seats or stored in one of the compartments to the side of the driver's seat or inserted in a pocket, if available, of the clothes worn by the driver.

In any case, the placement of the cellular telephone is very awkward, uncomfortable and unstable; the headset wire, for example, hinders arm movements, while the cellular telephone slides unpleasantly inside the compartment or slips off the seat.

The aim of the present invention is to eliminate the above-mentioned drawbacks, by providing a cellular telephone holder for vehicles that allows to store the cellular telephone safely, stably and conveniently, allowing its easy use even by the driver.

Within this aim, an object of the present invention is to provide a cellular telephone holder that is simple, relatively easy to provide in practice, safe in use, effective in operation, and has a relatively low cost.

This aim and this and other objects that will become better apparent hereinafter are achieved by the present cellular telephone holder for vehicles, characterized in that it comprises a cellular telephone support and means for fixing said support to a seat belt of a vehicle.

Further characteristics and advantages of the present invention will become better apparent from the detailed description of a preferred but not exclusive embodiment of a cellular telephone holder for vehicles, illustrated only by way of non-limitative example in the accompanying drawings, wherein:
Figure 1 is a schematic front view of the driver's seat of a motor vehicle provided with the cellular telephone holder according to the invention;
Figure 2 is an enlarged-scale perspective view of the portion of the seat belt of Figure 1, to which the cellular telephone holder according to the invention is applied;
Figure 3 is a schematic perspective exploded view of the support and of the fixing means of the cellular telephone holder according to the invention;
Figure 4 is a schematic perspective exploded view of the support and of the fixing means of an alternative embodiment of the cellular telephone holder according to the invention.

With reference to the figures, the reference numeral 1 generally designates a cellular telephone holder for vehicles.

The cellular telephone holder 1 comprises a support, which is constituted by a pocket-shaped case 2, inside which the cellular telephone C is inserted, and means 3 for fixing the case 2 to a seat belt 4 with which each seat of a motor vehicle is provided.

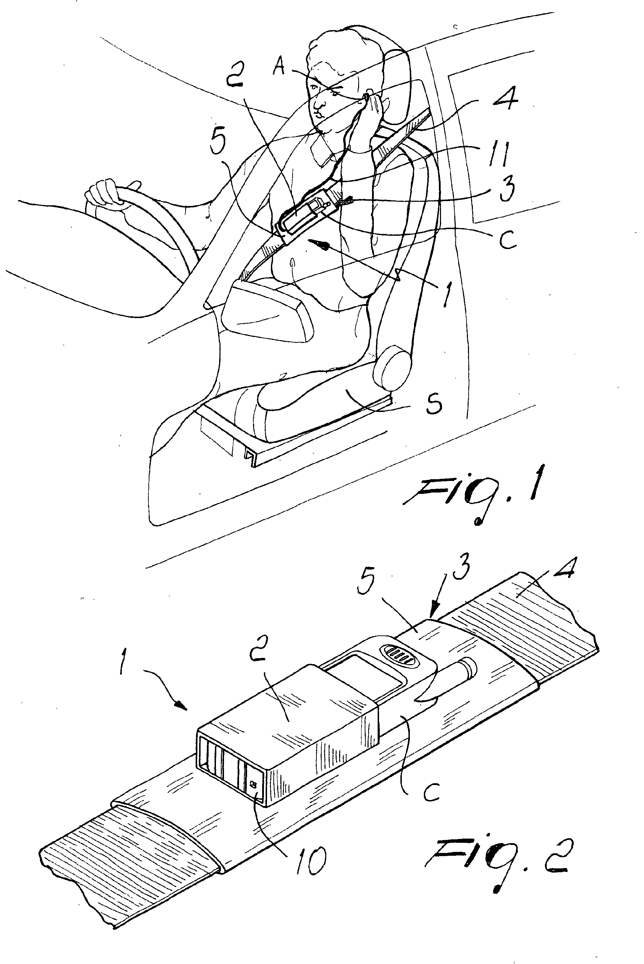

Figure 1 illustrates the particular case of the driver's seat S of a motor vehicle.

The fixing means 3 are of the detachable type and are constituted by a band 5, which is wound and closed around the belt 4 so that it clings and is stably anchored thereto.

For this purpose, for example, two side flaps 5a and 5b of the band 5, which are placed mutually adjacent and overlap on the back of the belt 4, have respectively on the rear face and on the front face complementary strips 6a and 6b of cling material, such as Velcro, which are designed to mutually mate.

The cellular telephone holder 1 further comprises means for coupling the case 2 to the band 5.

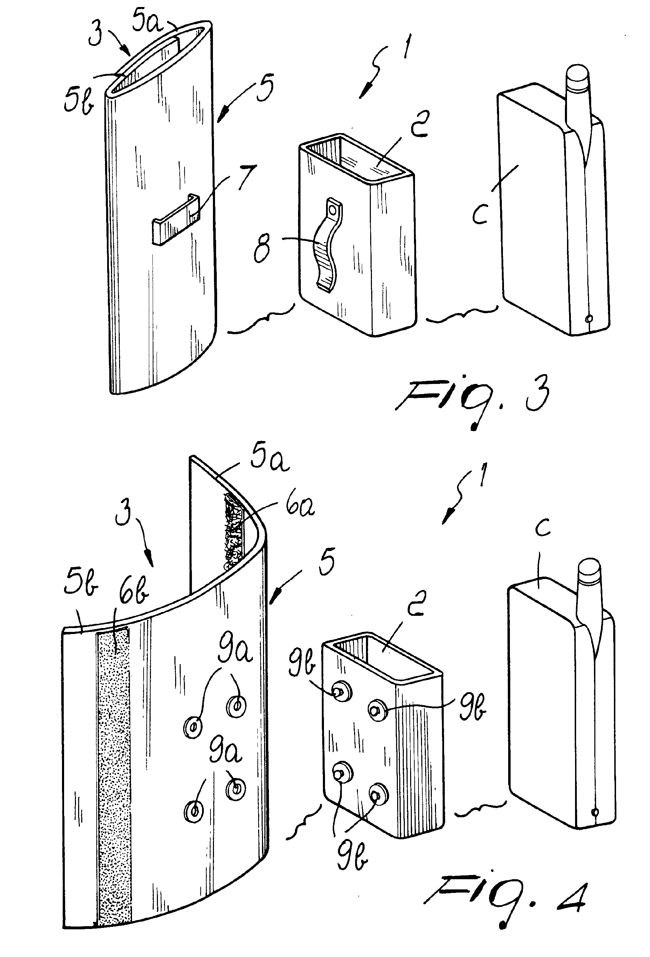

The coupling means (Figure 3) can be constituted by a loop 7, which is fixed to the front face of the band 5 and in which it is possible to insert a coupling tab 8 that is fixed to the rear face of the case 2.

As an alternative, the coupling means (Figure 4) can be constituted by four press-studs, each of which comprises two complementary elements 9a and 9b that can be mutually interlocked by pressing and are respectively applied to the front face of the band 5 and to the rear face of the case 2.

The coupling means can be constituted in general by a hook fixed to the case 2 and by a corresponding engagement element fixed to the band 5.

Advantageously, the case 2 is provided, on its bottom, with a slot 10 through which a wire 11 for connecting an in-ear headset A to the cellular telephone C exits.

In practice, it has been found that the described invention achieves the intended aim and object.

The invention thus conceived is susceptible of numerous modifications and variations, all of which are within the scope of the inventive concept.

All the details may furthermore be replaced with other technically equivalent ones.

In practice, the materials used, as well as the shapes and dimensions, may be any according to requirements without thereby abandoning the scope of the protection of the appended claims.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A cellular telephone holder (1), **characterized in that** it comprises a cellular telephone support (2) and means (3) for fixing said support (2) to a seat belt (4) of a vehicle.

2. The cellular telephone holder according to claim 1, **characterized in that** said support (2) is constituted by a case (2) for containing a cellular telephone (C).

3. The cellular telephone holder according to claim 1, **characterized in that** said fixing means (3) are of the removable type.

4. The cellular telephone holder according to one or more of the preceding claims, **characterized in that** said fixing means (3) comprise a band (5) that is wound snugly around said belt (4).

5. The cellular telephone holder according to one or more of the preceding claims, **characterized in that** said band (5) comprises two mutually opposite lateral flaps (5a, 5b), which are suitable to mutually overlap on the back of said belt (4) and are provided with respective complementary strips (6a, 6b) of cling material that are suitable to mutually mate.

6. The cellular telephone holder according to one or more of the preceding claims, **characterized in that** it comprises means (7) for coupling said support (2) to said band (5).

7. The cellular telephone holder according to one or more of the preceding claims, **characterized in that** said coupling means (7) are constituted by a loop that is rigidly coupled to said band (5) and in which it is possible to insert a tab (8) that is rigidly coupled to said support (2).

8. The cellular telephone holder according to one or more of the preceding claims, **characterized in that** said coupling means (7) are constituted by an engagement element that is rigidly coupled to said band (5) for a hook that is rigidly coupled to said support.

9. The cellular telephone holder according to one or more of the preceding claims, **characterized in that** said coupling means are constituted by at least one pair of complementary elements (9a, 9b) that can be mutually interlocked and are respectively rigidly coupled to said band (5) and to said support (2).

10. The cellular telephone holder according to one or more of the preceding claims, **characterized in that** said at least one pair of complementary elements (9a, 9b) is constituted by a press-stud.

11. The cellular telephone holder according to one or more of the preceding claims, **characterized in that** said support (2) is provided with a slot (10) for the passage of a wire (11) for connecting an in-ear headset (A) to the cellular telephone (C).
